# EUROPEAN PATENT SPECIFICATION

(11) **EP 4 239 982 B1**
(45) Date of publication and mention of the grant of the patent: **03.09.2025**
(21) Application number: 23187266.4
(22) Date of filing: 20.11.2020
(51) Int. Cl.: H04L 67/51, H04L 67/60, G06F 8/36, G06F 9/54

(54) **METHOD AND NETWORK ENTITY FOR SERVICE API PUBLISHING**
VERFAHREN UND NETZWERKEINHEIT ZUR VERÖFFENTLICHUNG VON DIENST-APIS
PROCÉDÉ ET ENTITÉ DE RÉSEAU POUR PUBLICATION D'API DE SERVICE

(30) Priority: 14.02.2020 WO PCT/CN2020/075379
(43) Date of publication of application: 06.09.2023
(62) Divisional of application: 20811591.5
(73) Proprietor: Telefonaktiebolaget LM Ericsson (publ), 164 83 Stockholm (SE)
(72) Inventor: XU, Wenliang, Shanghai, 200335 (CN)
(74) Representative: Ericsson

(56) References cited:
- UNKNOWN: "3rd Generation Partnership Project; Technical Specification Group Services and System Aspects; Functional architecture and information flows to support Common API Framework for 3GPP Northbound APIs; Stage 2 (Release 16); version 16.6.0", 22 December 2019 (2019-12-22), XP055766714, Retrieved from the Internet <URL:https://portal.3gpp.org/desktopmodules/Specifications/SpecificationDetails.aspx?specificationId=3337> [retrieved on 20210119]
- HUAWEI ET AL: "API publish and API discover for CAPIF interconnection", vol. SA WG6, no. Vilnius, Lithuania; 20181015 - 20181019, 8 October 2018 (2018-10-08), XP051545232, Retrieved from the Internet <URL:http://www.3gpp.org/ftp/tsg%5Fsa/WG6%5FMissionCritical/TSGS6%5F026%5FVilnius/Docs/S6%2D181382%2Ezip> [retrieved on 20181008]

## Description

### TECHNICAL FIELD

The present disclosure relates to communication technology, and more particularly, to a method and a network entity for service Application Programming Interface (API) publishing.

### BACKGROUND

With the growing interest in the 3^{rd} Generation Partnership Project (3GPP) to develop northbound APIs, a Common API Framework (CAPIF) allows for a consistent development of northbound APIs across multiple working groups, i.e., for defining northbound APIs to abstract or expose the underlying 3GPP network capabilities to the 3^{rd} party applications. The CAPIF offers a common framework for northbound APIs with respect to API registration, authentication, discovery, logging, and charging.

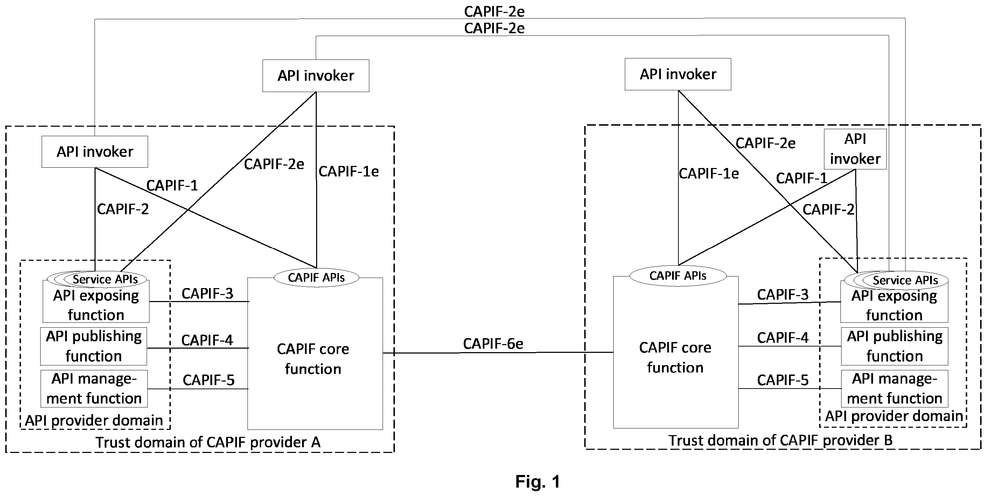

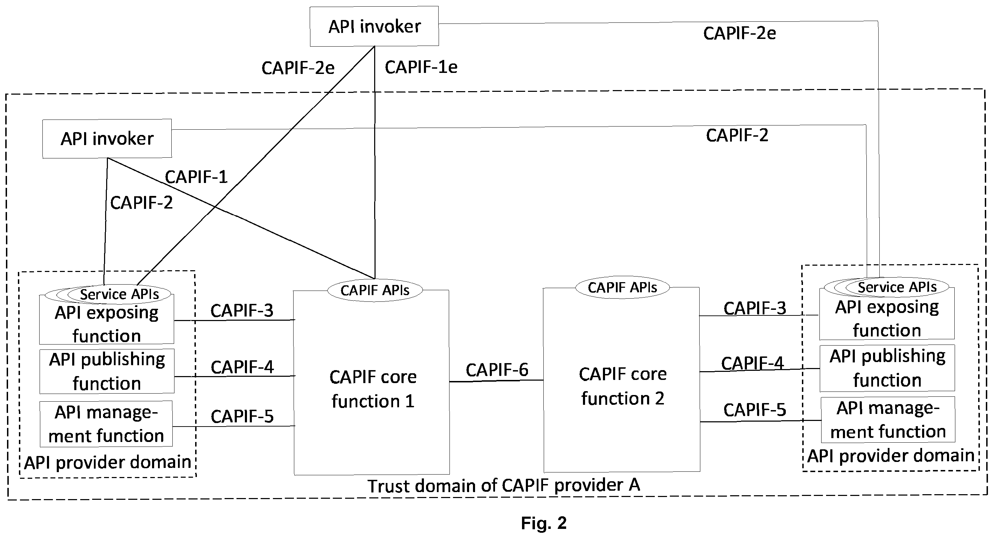

In the 3GPP Release 16, the CAPIF is enhanced with interconnection between different CAPIF provider domains or within the same CAPIF provider domain. Fig. 1 shows an architectural model for the CAPIF interconnection which allows API invokers of a CAPIF provider to utilize service APIs from the 3^{rd} party CAPIF provider. Fig. 2 shows an architectural model for the CAPIF interconnection within the same CAPIF provider domain, which allows API invokers of CAPIF Core Function (CCF) 1 to utilize service APIs from CCF 2, where both CCFs are hosted within the trust domain of the CAPIF provider A. In Fig. 1, the two CCFs are connected with each other via a CAPIF-6e interface (reference point); while in Fig. 2, the two CCFs are connected with each other via a CAPIF-6 interface (reference point). The CAPIF-6/6e interface supports publishing and discovering service API information. For service API publishing, the API Publishing Function (APF) (which enables the API provider to publish service API information to the CCF in order to enable discovery of service APIs by API invokers) or CCF can indicate Shareable Information in an API publish request or interconnection API publish request, such information indicates whether the service API can be shared and if shared, shared with which CAPIF provider domains. For further details of these and other functional entities, interfaces (reference points), API publish request and response, and interconnection API publish request and response, reference can be made to 3GPP Technical Specification (TS) 23.222, V16.6.0. Said document 3GPP TS 23.222 V16.6.0 discloses the architecture, procedures and information flows necessary for the CAPIF. Aspects of this document include identifying architecture requirements for the CAPIF (e.g. registration, discovery, identity management) that are applicable to any service APIs when used by northbound entities, as well as any interactions between the CAPIF and the service APIs themselves. The common API framework applies to both EPS and 5GS, and is independent of the underlying 3GPP access (e.g. E-UTRA, NR).

Document "API publish and API discover for CAPIF interconnection", Huawei et.al., 3GPP change request, S6-181382, discloses details on the CAPIF interconnection functional model. Regarding CAPIF-6 between the CAPIF instances in the same trust domain, the service API publish and service API discovery should be supported. Regarding CAPIF-6e between the CAPIF instances in the different trust domain, the service API publish should be supported. Compared with API publish from API publish function to CCF, the API published between two CCFs may be the high level information such as API type, rather than the details of the service API especially the CCFs belonging to different trust domain. Corresponding to the API publish for CCF interconnection, a CCF may get the CCF identity which publishes the high level information of service APIs rather than the details of service APIs.

### SUMMARY

It is an object of the present disclosure to provide a method and a network entity for service API publishing.

According to the present disclosure, there are provided methods, a first network entity and a computer-readable storage medium according to the independent claims. Further developments are set forth in the dependent claims.

According to a first aspect of the present disclosure, a method in a first network entity for service API publishing is provided. The method includes: receiving, from a second network entity, a first API publish request for publishing a service API, the first API publish request containing a list of identifiers of network entities that have published the service API; and transmitting, when an identifier of the first network entity is included in the list, an API publish response indicating failure of publishing of the service API to the second network entity.

Preferably, the second API publish request is transmitted in response to determining that an identifier of the third network entity is not included in the first list.

Preferably, the method further includes, when the identifier of the first network entity is not included in the first list: creating a new resource for the service API at the first network entity; and transmitting, to the second network entity, an API publish response indicating success of publishing of the service API and containing an identifier of the created new resource.

Preferably, each of the first network entity, the second network entity, the third network entity, and the network entities that have published the service API is a CCF entity.

Preferably, the first network entity, the second network entity, the third network entity, and the network entities that have published the service API all are in one single CAPIF provider domain.

According to a second aspect of the present disclosure, a method in a first network entity for service API publishing is provided. The method includes: receiving, from a second network entity, a first API publish request for publishing a service API, the first API publish request containing a first list of identifiers of network entities that have published the service API; and when an identifier of the first network entity is not included in the first list, adding the identifier of the first network entity to the first list to obtain a second list of identifiers of network entities.

According to a third aspect of the present disclosure, a first network entity is provided. The first network entity includes a communication interface, a processor and a memory. The memory stores instructions executable by the processor whereby the first network entity is operative to perform the method according to the above first and/or second aspect.

According to a fourth aspect of the present disclosure, a computer readable storage medium is provided. The computer readable storage medium has computer program instructions stored thereon. The computer program instructions, when executed by a processor in a first network entity, cause the first network entity to perform the method according to the above first and/or second aspect.

With the embodiments of the present disclosure, upon receiving an API publish request for publishing a service API, a network entity can determine whether its identifier is included in a list of identifiers of network entities that have published the service API (if contained in the API publish request). When its identifier is included in the list, the network entity will respond with a result indicating failure of publishing of the service API, without creating a new resource for the service API or further publishing the service API to any network entity. On the other hand, only when its identifier is not included in the list, the CCF entity will create a new resource for the service API and/or transmit a further API publish request for publishing the service API to another network entity. The further API publish request can contain an updated list of identifiers of network entities that have published the service API, with the identifier of the network entity added to the list. In this way, the network entity can avoid creating redundant resources for the same service API and can prevent a loop for publishing the serving API.

### BRIEF DESCRIPTION OF THE DRAWINGS

Hereinabove and in the following, "examples" pertain to principles underlying the claimed subject-matter and/or being useful for understanding the claimed subject-matter, while "embodiments" pertain to the claimed subject-matter within the claim scope. The above and other objects, features and advantages will be more apparent from the following description of embodiments with reference to the figures, in which:
- Fig. 1: is a schematic diagram showing an architectural model for a **CAPIF** interconnection across different **CAPIF** provider domains according to an example;
- Fig. 2: is a schematic diagram showing an architectural model for a **CAPIF** interconnection within one **CAPIF** provider domain according to an example;
- Fig. 3: is a schematic diagram showing an example of a loop for publishing a service API according to an example;
- Fig. 4: is a flowchart illustrating a method for service API publishing according to an embodiment of the present disclosure;
- Fig. 5: is a flowchart illustrating a method for service API publishing according to an example;
- Fig. 6: is a sequence diagram showing an exemplary process for service API publishing according to an embodiment of the present disclosure;
- Fig. 7: is a block diagram of a network entity according to an example; and
- Fig. 8: is a block diagram of a network entity according to another embodiment of the present disclosure.

Whenever in the following disclosure the term "embodiment" occurs, reference is to be made to the figure description above to clarify whether an embodiment or an example is meant.

### DETAILED DESCRIPTION

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

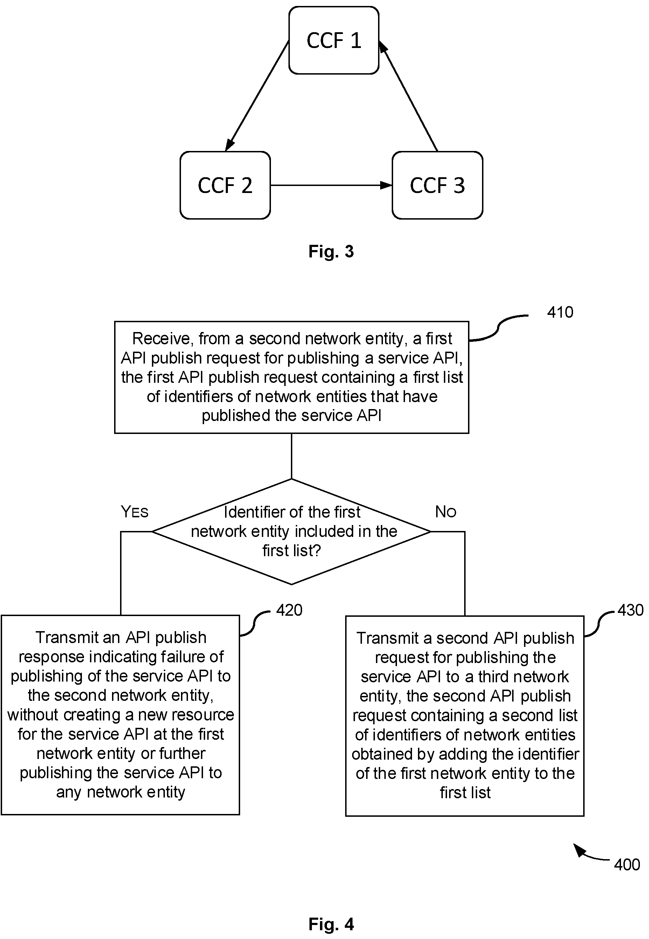

For service API publishing via CAPIF-6/6e interfaces, as shown in Fig. 3, it is possible that an API is first published from CCF 1 to CCF 2, then from CCF 2 to CCF 3, and then from CCF 3 back to CCF 1. In this case, CCF 1 will create a new service API resource for the API, in addition to the service API resource it has created when the API is initially published, e.g., from an APF. Thus, CCF 1 will have redundant resources occupied by the same API. More seriously, CCF 1 may again publish the API to CCF 2, which then may publish the API to CCF 3, and so on and so forth, resulting in a loop of service API publishing.

Fig. 4 is a flowchart illustrating a method 400 for service API publishing according to an embodiment of the present disclosure. The method 400 can be performed at a first network entity, e.g., a CCF entity.

At block 410, a first API publish request for publishing a service API is received from a second network entity (e.g., a CCF entity). The first API publish request contains a first list of identifiers of network entities (e.g., CCF entities) that have published the service API. In this context, the list can also be referred to as a "published API path", or "API path" for short.

Here, the first API publish request can be an interconnection API publish request as specified in Section 8.25.2 of TS 23.222. Table 8.25.2.1-1 of TS 23.222 defines Information Elements (IEs) in the interconnection API publish request, which is reproduced as Table 1 below:

**Table 1: Interconnection API publish request**

| **Information element** | **Status** | **Description** |
|---|---|---|
| CCF information | M | The information of the CAPIF core function which publishes APIs, may include identity, authentication and authorization information |
| Service API information | O (see NOTE 1) | The service API information includes the service API name, service API type, communication type, description, interface details (e.g. IP address, port number, URI), protocols, version numbers, and data format. |
| Service API category | O (see NOTE 1) | The category of the service APIs to be published, (e.g.,V2X, IoT) |
| Shareable information | O (see NOTE 2) | Indicates whether the service API or the service API category can be published to other CCFs. And if sharing, a list of CAPIF provider domain information where the service API or the service API category can be published is contained. |
| CAPIF provider domain information | O (see NOTE 3) | Indicates the CAPIF provider domain of the service API to be published |
| NOTE 1: At least one of the Service API information and Service API category shall be present. | | |
| NOTE 2: If the shareable information is not present, the service API is not allowed to be shared. | | |
| NOTE 3: This is only presented when publish service API to a different CAPIF provider domain. | | |

The service API information in the above Table 8.25.2.1-1 is defined in detail in Table 8.2.4.2.2-1 of TS 29.222 V16.1.0, which can be changed to include the API path, as shown in Table 2 below:

**Table 2: Definition of type ServiceAPIDescription**

| **Attribute name** | **Data type** | **P** | **Cardinality** | **Description** | **Applicability** |
|---|---|---|---|---|---|
| apiName | string | M | 1 | API name, it is set as {apiName} part of the URI structure as defined in subclause 4.4 of 3GPP TS 29.501 [18]. | |
| apild | string | O | 0..1 | API identifier assigned by the CAPIF core function to the published service API. Shall not be present in the HTTP POST request from the API publishing function to the CAPIF core function. Shall be present in the HTTP POST response from the CAPIF core function to the API publishing function and in the HTTP GET response from the CAPIF core function to the API invoker (discovery API). | |
| aefProfiles | array(AefP rofile) | M | 1..N | AEF profile information, which includes the exposed API details (e.g. protocol). | |
| description | string | O | 0..1 | Text description of the API | |
| supportedFeatu res | Supported Features | O | 0..1 | The supported optional features of the CAPIF API. (NOTE) | |
| shareableInfo | Shareable Information | O | 0..1 | Represents whether the service API and/or the service API category can be published to other CCFs. | |
| serviceAPICate gory | string | O | 0..1 | The service API category to which the service API belongs to. | |
| apiSuppFeats | Supported Features | O | 0..1 | The features supported by the service API indicated by the apild attribute. | ApiSupportedFe aturePublishing |
| pubApiPath | Published ApiPath | C | 0..1 | It contains the published API path within the same CAPIF provider domain. it shall be provided by the CCF when publishing the service API to other CCF via the CAPIF-6/6e reference point. | |
| NOTE: | For CAPIF_Publish_Service_API, the supported features attribute shall be provided in the HTTP POST request and in the response of successful resource creation. In addition, the supportedFeatures attribute may include one or more the supported features as defined in subclause 8.2.6. | | | | |

The attribute "pubApiPath" contains identifiers of CCF entities that have published the API. For example, the data type "PublishedApiPath" can be defined in Table 3 below:

**Table 3: Definition of type PublishedApiPath**

| **Attribute name** | **Data type** | **P** | **Cardinality** | **Description** | **Applicability** |
|---|---|---|---|---|---|
| ccflds | array(string) | O | 1..N | A list of CCF identifiers. | |

For further details of other IEs in Table 1 and other attributes in Table 2, reference can be made to Table 8.25.2.1-1 of TS 23.222 and Table 8.2.4.2.2-1 of TS 29.222, respectively, and details thereof will be omitted here.

When an identifier of the first network entity is included in the first list, at block 420, an API publish response indicating failure of publishing of the service API is transmitted to the second network entity, without creating a new resource for the service API at the first network entity or further publishing the service API to any network entity. That is, when the identifier of the first network identity is included the API path, it means that the service API published in the first API publish request is a service API the first entity has published. In this case, the first network entity will not create any new resource for the same service API or further publish the service API to any network entity, thereby avoiding a waste of resources and a loop for API publishing. Here, the API publish response can be an interconnection API publish response as specified in Section 8.25.2.2 of TS 23.222.

On the other hand, when the identifier of the first network entity is not included in the first list, at block 430, a second API publish request for publishing the service API is transmitted to a third network entity (e.g., a CCF entity). The second API publish request contains a second list of identifiers of network entities obtained by adding the identifier of the first network entity to the first list.

In an example, in the block 430, the second API publish request can be transmitted in response to determining that an identifier of the third network entity is not included in the first list. In other words, if the first network entity knows the identifier of the third network entity and determines that the identifier of the third network entity is included in the first list, meaning that the service API is a service API the third entity has published, the first network entity may not transmit the second API publish request to further publish the same service API to the third network entity, thereby avoiding a waste of resources and a loop for API publishing.

Further, when the identifier of the first network entity is not included in the first list, the first network entity can create a new resource for the service API at the first network entity; and transmit, to the second network entity, an API publish response indicating success of publishing of the service API and containing an identifier of the created new resource. Here, the API publish response can be an interconnection API publish response as specified in Section 8.25.2.2 of TS 23.222.

In an example, the first network entity, the second network entity, the third network entity, and the network entities that have published the service API may all be in one single CAPIF provider domain. In another example, these network entities may belong to different CAPIF provider domains.

In an implementation, the method 400 may include only the blocks 410 and 420. In another implementation, the method 400 may include only the blocks 410 and 430. In yet another implementation, the method 400 may include the blocks 410, 420 and 430.

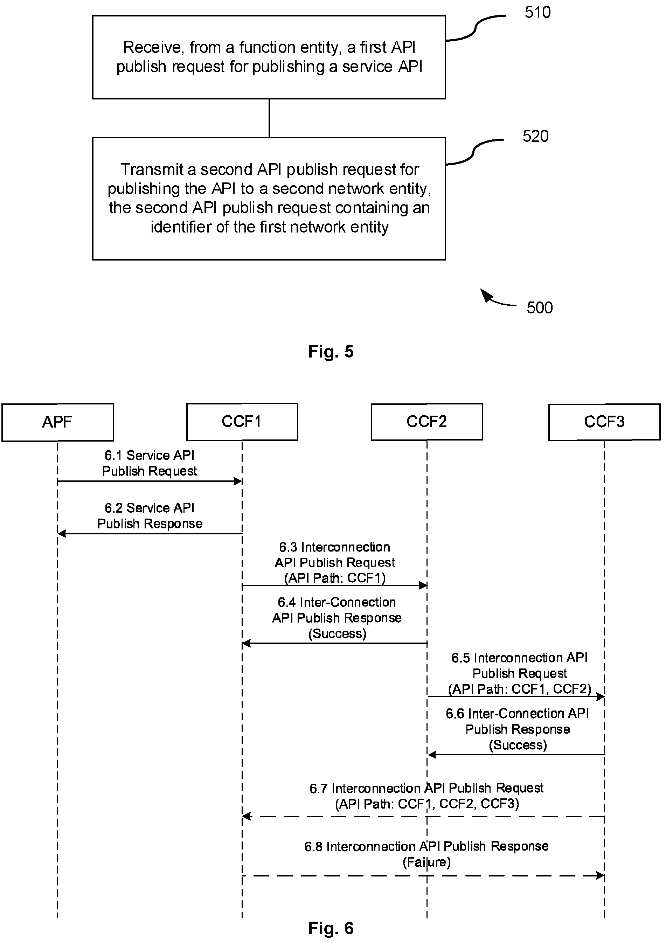

Fig. 5 is a flowchart illustrating a method 500 for service API publishing according to an embodiment of the present disclosure. The method 500 can be performed at a first network entity, e.g., a CCF entity.

At block 510, a first API publish request for publishing a service API is received from a function entity (e.g., an APF entity). The first API publish request can be e.g., a service API publish request as specified in Section 8.3.2.1 of TS 23.222.

At block 520, a second API publish request for publishing the API is transmitted to a second network entity (e.g., a CCF entity), e.g., in response to the first API publish request containing no API path. The second API publish request contains an identifier of the first network entity, e.g., in an API path. The second API publish request can be an interconnection API publish request according to Table 1 and contain "pubApiPath" according to Table 2.

Here, as the first API publish request contains no API path, the first network entity can create a new resource for the service API at the first network entity, and transmit, to the function entity, an API publish response indicating success of publishing of the service API and containing an identifier of the created new resource. Here, the API publish response can be a service API publish response as specified in Section 8.3.2.2 of TS 23.222.

In an example, the first network entity and the second network entity can be both in one single CAPIF provider domain. In another example, these network entities may belong to different CAPIF provider domains.

Fig. 6 is a sequence diagram showing an exemplary process for service API publishing according to an embodiment of the present disclosure. The process can be performed in a communication system including at least an APF entity and a plurality of CCF entities (e.g., CCF1, CCF2, and CCF3).

At 6.1, the APF entity transmits a service API publish request for publishing a service API to CCF1. As the service API publish request from the APF entity contains no API path, CCF1 creates a new resource for the service API and transmits a service API publish response indicating success of publishing of the service API and containing an identifier of the created new resource to the APF entity at 6.2. At 6.3, if the service API is to be shared with CCF2 (depending on Sharable Information in the service API publish request), CCF1 transmits an interconnection API publish request for publishing the service API to CCF2, containing an API path including an identifier of CCF1. Upon receiving the interconnection API publish request, CCF2 checks the API path and determines that an identifier of CCF2 is not included in the API path. Accordingly, CCF2 creates a new resource for the service API and transmits an interconnection API publish response indicating success of publishing of the service API and containing an identifier of the created new resource to CCF1 at 6.4. If the service API is to be shared with CCF3 (depending on Sharable Information in the interconnection API publish request from CCF1), CCF2 may first determine whether an identifier of CCF3 is included in the API path, if it is known to CCF2. If the identifier of CCF3 is known and not included in the API path, or if the identifier of CCF3 is unknown to CCF2, at 6.5, CCF2 transmits an interconnection API publish request for publishing the service API to CCF3, containing an API path including the identifiers of CCF1 and CCF2. Upon receiving the interconnection **API** publish request, CCF3 checks the **API** path and determines that the identifier of CCF3 is not included in the **API** path. Accordingly, CCF3 creates a new resource for the service **API** and transmits an interconnection **API** publish response indicating success of publishing of the service **API** and containing an identifier of the created new resource to CCF2 at 6.6.

**If** the service **API** is to be shared with CCF1 (depending on Sharable Information in the interconnection **API** publish request from CCF2), CCF3 may first determine whether the identifier of CCF1 is included in the **API** path, if it is known to CCF3. **If** the identifier of CCF1 is known and included in the **API** path, CCF3 will not further publish the service API back to CCF1 and there will be no loop accordingly. However, if the identifier of CCF1 is unknown to CCF3, at 6.7, CCF3 transmits an interconnection API publish request for publishing the service API to CCF1, containing an API path including the identifiers of CCF1, CCF2, and CCF3. Upon receiving the interconnection API publish request, CCF1 checks the API path and determines that the identifier of CCF1 is included in the API path. Accordingly, CCF1 transmits an interconnection API publish response indicating failure of publishing of the service API to CCF3 at 6.8, without creating a new resource for the service API at CCF1 or further publishing the service API to any network entity. In this case, there will be no loop for publishing the service API.

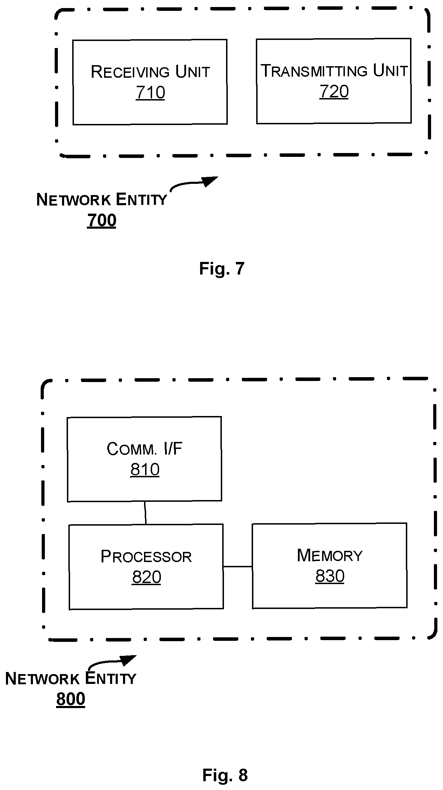

Correspondingly to the method 400 or 500 as described above, a first network entity is provided. Fig. 7 is a block diagram of a first network entity 700 according to an embodiment of the present disclosure.

The first network entity 700 can be operative to perform the method 400 as shown in Fig. 4. As discussed above in connection with the method 400, in an implementation, the first network entity 700 can be operative to perform only the blocks 410 and 420 in the method 400. In another implementation, the first network entity 700 can be operative to perform only the blocks 410 and 430 in the method 400. In yet another implementation, the first network entity 700 can be operative to perform the blocks 410, 420 and 430 in the method 400.

As shown in Fig. 7, the first network entity 700 includes a receiving unit 710 configured to receive, from a second network entity, a first API publish request for publishing a service API, the first API publish request containing a first list of identifiers of network entities that have published the service API.

The first network entity 700 further includes a transmitting unit 720 configured to transmit, when an identifier of the first network entity is included in the first list, an API publish response indicating failure of publishing of the service API to the second network entity. In this case, the first network entity 700 will not create a new resource for the service API at the first network entity or further publish the service API to any network entity.

Alternatively or additionally, the transmitting unit 720 can be configured to transmit, when an identifier of the first network entity is not included in the first list, a second API publish request for publishing the service API to a third network entity, the second API publish request containing a second list of identifiers of network entities obtained by adding the identifier of the first network entity to the first list. In this case, the second API publish request may be transmitted in response to determining that an identifier of the third network entity is not included in the first list. The first network entity 700 can further include a creating unit configured to create a new resource for the service API at the first network entity, and the transmitting unit 720 can be further configured to transmit, to the second network entity, an API publish response indicating success of publishing of the service API and containing an identifier of the created new resource.

In an embodiment, each of the first network entity, the second network entity, the third network entity, and the network entities that have published the service API may be a CCF entity.

In an embodiment, the first network entity, the second network entity, the third network entity, and the network entities that have published the service API may all be in one single CAPIF provider domain.

Alternatively, the network entity 700 can be operative to perform the method 500 as shown in Fig. 5. As shown in Fig. 7, the network entity 700 includes a receiving unit 710 configured to receive, from a function entity, a first API publish request for publishing a service API. The network entity 700 further includes a transmitting unit 720 configured to transmit a second API publish request for publishing the API to a second network entity, the second API publish request containing an identifier of the first network entity.

In an embodiment, each of the first network entity and the second network entity may be a CCF entity, and the function entity may be an APF entity.

In an embodiment, the first network entity and the second network entity may both be in one single CAPIF provider domain.

The units 710 and 720 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 4 or 5.

Fig. 8 is a block diagram of a first network entity 800 according to another embodiment of the present disclosure.

The first network entity 800 includes a communication interface 810, a processor 820 and a memory 830. The memory 830 may contain instructions executable by the processor 820 whereby the first network entity 800 is operative to perform the actions, e.g., of the procedure described earlier in conjunction with Fig. 4. As discussed above in connection with the method 400, in an implementation, the first network entity 800 can be operative to perform only the blocks 410 and 420 in the method 400. In another implementation, the first network entity 800 can be operative to perform only the blocks 410 and 430 in the method 400. In yet another implementation, the first network entity 800 can be operative to perform the blocks 410, 420 and 430 in the method 400.

Particularly, the memory 830 contains instructions executable by the processor 820 whereby the first network entity 800 is operative to receive, from a second network entity, a first API publish request for publishing a service API, the first API publish request containing a first list of identifiers of network entities that have published the service API.

The memory 830 may further contain instructions executable by the processor 820 whereby the first network entity 800 is operative to transmit, when an identifier of the first network entity is included in the first list, an API publish response indicating failure of publishing of the service API to the second network entity, without creating a new resource for the service API at the first network entity or further publishing the service API to any network entity.

Alternatively or additionally, the memory 830 may further contain instructions executable by the processor 820 whereby the first network entity 800 is operative to transmit, when an identifier of the first network entity is not included in the first list, a second API publish request for publishing the service API to a third network entity, the second API publish request containing a second list of identifiers of network entities obtained by adding the identifier of the first network entity to the first list. In an embodiment, the second API publish request may be transmitted in response to determining that an identifier of the third network entity is not included in the first list. In an embodiment, the memory 830 may further contain instructions executable by the processor 820 whereby the first network entity 800 is operative to, when the identifier of the first network entity is not included in the first list: create a new resource for the service API at the first network entity; and transmit, to the second network entity, an API publish response indicating success of publishing of the service API and containing an identifier of the created new resource.

In an embodiment, each of the first network entity, the second network entity, the third network entity, and the network entities that have published the service API may be a CCF entity.

In an embodiment, the first network entity, the second network entity, the third network entity, and the network entities that have published the service API may all be in one single CAPIF provider domain.

Alternatively, the memory 830 may contain instructions executable by the processor 820 whereby the first network entity 800 is operative to perform the actions, e.g., of the procedure described earlier in conjunction with Fig. 5. Particularly, the memory 830 contains instructions executable by the processor 820 whereby the first network entity 800 is operative to receive, from a function entity, a first API publish request for publishing a service API; and transmit a second API publish request for publishing the API to a second network entity, the second API publish request containing an identifier of the first network entity.

In an embodiment, each of the first network entity and the second network entity may be a CCF entity, and the function entity may be an APF entity.

In an embodiment, the first network entity and the second network entity may both be in one single CAPIF provider domain.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 820 causes the network entity 800 to perform the actions, e.g., of the procedure described earlier in conjunction with Fig. 4 or 5.

The computer program product may be configured as a computer program code structured in computer program modules. The computer program modules could essentially perform the actions of the flow illustrated in Fig. 4 or 5.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

## Claims

1. A method (400) in a first network entity for service Application Programming Interface, API, publishing, comprising:
receiving (410), from a second network entity, a first API publish request for publishing a service API, the first API publish request containing a list of identifiers of network entities that have published the service API; and
transmitting (420), when an identifier of the first network entity is included in the list, an API publish response indicating failure of publishing of the service API to the second network entity.

2. The method (400) of claim 1, further comprising, when the identifier of the first network entity is not included in the first list:
creating a new resource for the service API at the first network entity; and
transmitting, to the second network entity, an API publish response indicating success of publishing of the service API and containing an identifier of the created new resource.

3. The method (400) of claim 1 or 2, wherein each of the first network entity, the second network entity, the third network entity, and the network entities that have published the service API is a Common API Framework 'CAPIF' Core Function, CCF, entity.

4. The method (400) of claim 3, wherein the first network entity, the second network entity, the third network entity, and the network entities that have published the service API are all in one single CAPIF provider domain.

5. A method (400) in a first network entity for service Application Programming Interface, API, publishing, comprising:
receiving (410), from a second network entity, a first API publish request for publishing a service API, the first API publish request containing a first list of identifiers of network entities that have published the service API; and
when an identifier of the first network entity is not included in the first list, adding the identifier of the first network entity to the first list to obtain a second list of identifiers of network entities.

6. The method (400) of claim 5, the method (400) further comprising:
transmitting (430) a request to a third network entity, wherein the request contains the second list of the identifiers of network entities, in response to determining that an identifier of the third network entity is not included in the first list.

7. The method (400) of claim 5 or 6 , further comprising, when the identifier of the first network entity is not included in the first list:
creating a new resource for the service API at the first network entity; and
transmitting, to the second network entity, an API publish response indicating success of publishing of the service API and containing an identifier of the created new resource.

8. The method (400) of any of claims 5 to 7, wherein each of the first network entity, the second network entity, the third network entity, and the network entities that have published the service API is a Common API Framework 'CAPIF' Core Function, CCF, entity.

9. The method (400) of claim 8, wherein the first network entity, the second network entity, the third network entity, and the network entities that have published the service API are all in one single CAPIF provider domain.

10. A first network entity (800) comprising a communication interface (810), a processor (820) and a memory (830), the memory (830) comprising instructions executable by the processor (820) whereby the first network entity (800) is operative to perform the method according to any of claims 1 to 9.

11. A computer readable storage medium having computer program instructions stored thereon, the computer program instructions, when executed by a processor in a first network entity, causing the first network entity to perform the method according to any of claims 1 to 9.

## Patentansprüche

1. Verfahren (400) zum Veröffentlichen einer Service-Anwendungsprogrammierschnittstelle, API, in einer ersten Netzwerkentität, das umfasst:
Empfangen (410) einer ersten Anfrage zur API-Veröffentlichung zum Veröffentlichen einer Service-API von einer zweiten Netzwerkentität, wobei die erste Anfrage zur API-Veröffentlichung eine Liste von Kennungen von Netzwerkentitäten enthält, die die Service-API veröffentlicht haben; und
Übertragen (420) einer Antwort in Bezug auf die API-Veröffentlichung, die anzeigt, dass das Veröffentlichen der Service-API fehlgeschlagen ist, wenn eine Kennung der ersten Netzwerkentität in der Liste enthalten ist, an die zweite Netzwerkentität.

2. Verfahren (400) nach Anspruch 1, die, wenn die Kennung der ersten Netzwerkentität nicht in der ersten Liste enthalten ist, ferner umfasst:
Erstellen einer neuen Ressource für die Service-API an der ersten Netzwerk-Entität; und
Übertragen einer Antwort in Bezug auf die API-Veröffentlichung, die anzeigt, dass die Veröffentlichung der Service-API erfolgreich war, und die eine Kennung der erstellten neuen Ressource enthält, an die zweite Netzwerkentität.

3. Verfahren (400) nach Anspruch 1 oder 2, wobei jede der ersten Netzwerkentität, der zweiten Netzwerkentität, der dritten Netzwerkentität und der Netzwerkentitäten, die die Service-API veröffentlicht haben, eine "Common API Framework, CAPIF, Core Function"-Entität ist.

4. Verfahren (400) nach Anspruch 3, wobei die erste Netzwerkentität, die zweite Netzwerkentität, die dritte Netzwerkentität und die Netzwerkentitäten, die die Service-API veröffentlicht haben, allesamt in einer einzelnen CAPIF-Provider-Domäne sind.

5. Verfahren (400) zum Veröffentlichen einer Service-Anwendungsprogrammierschnittstelle, API, in einer ersten Netzwerkentität, das umfasst:
Empfangen (410) einer ersten Anfrage zur API-Veröffentlichung zum Veröffentlichen einer Service-API von einer zweiten Netzwerkentität, wobei die erste Anfrage zur API-Veröffentlichung eine erste Liste von Kennungen von Netzwerkentitäten enthält, die die Service-API veröffentlicht haben; und
wenn eine Kennung der ersten Netzwerkentität nicht in der ersten Liste enthalten ist, Hinzufügen der Kennung der ersten Netzwerkentität zu der ersten Liste, um eine zweite Liste von Kennungen von Netzwerkentitäten zu erhalten.

6. Verfahren (400) nach Anspruch 5, wobei das Verfahren (400) ferner umfasst:
Übertragen (430) einer Anfrage an eine dritte Netzwerkentität, wobei die Anfrage die zweite Liste der Kennungen von Netzwerkentitäten enthält, wenn bestimmt wird, dass eine Kennung der dritten Netzwerkentität in der ersten Liste nicht enthalten ist.

7. Verfahren (400) nach Anspruch 5 oder 6, das, wenn die Kennung der ersten Netzwerkentität in der ersten Liste nicht enthalten ist, ferner umfasst:
Erstellen einer neuen Ressource für die Service-API an der ersten Netzwerkentität; und
Übertragen einer Antwort in Bezug auf die API-Veröffentlichung, die anzeigt, dass die Veröffentlichung der Service-API erfolgreich war, und die eine Kennung der erstellten neuen Ressource enthält, an die zweite Netzwerkidentität.

8. Verfahren (400) nach einem der Ansprüche 5 bis 7, wobei jede der ersten Netzwerkentität, der zweiten Netzwerkentität, der dritten Netzwerkentität und der Netzwerkentitäten, die die Service-API veröffentlicht haben, eine "Common API Framework, CAPIF, Core Function"-Entität ist.

9. Verfahren (400) nach Anspruch 8, wobei die erste Netzwerkentität, die zweite Netzwerkentität, die dritte Netzwerkentität und die Netzwerkentitäten, die die Service-API veröffentlicht haben, allesamt in einer einzelnen CAPIF-Provider-Domäne sind.

10. Erste Netzwerkentität (800), die eine Kommunikationsschnittstelle (810), einen Prozessor (820) und einen Speicher (830) umfasst, wobei der Speicher (830) Anweisungen umfasst, die durch den Prozessor (820) ausführbar sind, durch die die erste Netzwerkentität (800) so betreibbar ist, dass sie das Verfahren nach einem der Ansprüche 1 bis 9 ausführt.

11. Computerlesbares Speichermedium mit darauf gespeicherten Computerprogrammanweisungen, wobei die Computerprogrammanweisungen, wenn sie von einem Prozessor in einer ersten Netzwerkentität ausgeführt werden, die erste Netzwerkentität dazu veranlassen, das Verfahren nach einem der Ansprüche 1 bis 9 durchzuführen.

## Revendications

1. Procédé (400) dans une première entité réseau pour la publication d'une interface de programmation d'application, API, de service, comprenant :
la réception (410), à partir d'une deuxième entité réseau, d'une première demande de publication d'API pour publier une API de service, la première demande de publication d'API contenant une liste d'identifiants d'entités réseau qui ont publié l'API de service ; et
la transmission (420), lorsqu'un identifiant de la première entité réseau est inclus dans la liste, d'une réponse de publication d'API indiquant l'échec de la publication de l'API de service vers la deuxième entité réseau.

2. Procédé (400) selon la revendication 1, comprenant en outre, lorsque l'identifiant de la première entité de réseau n'est pas inclus dans la première liste :
la création d'une nouvelle ressource pour l'API de service au niveau de la première entité réseau ; et
la transmission, à la deuxième entité réseau, d'une réponse de publication d'API indiquant le succès de la publication de l'API de service et contenant un identifiant de la nouvelle ressource créée.

3. Procédé (400) selon la revendication 1 ou 2, dans lequel chacune de la première entité de réseau, de la deuxième entité de réseau, de la troisième entité de réseau, et des entités de réseau qui ont publié l'API de service est une entité de fonction principale du cadre d'API commun « CAPIF », CCF.

4. Procédé (400) selon la revendication 3, dans lequel la première entité de réseau, la deuxième entité de réseau, la troisième entité de réseau, et les entités de réseau qui ont publié l'API de service sont toutes dans un seul domaine de fournisseur CAPIF.

5. Procédé (400) dans une première entité de réseau pour la publication d'une interface de programmation d'application, API, de service, comprenant :
la réception (410), à partir d'une deuxième entité réseau, d'une première demande de publication d'API pour publier une API de service, la première demande de publication d'API contenant une première liste d'identifiants d'entités de réseau qui ont publié l'API de service ; et
lorsqu'un identifiant de la première entité de réseau n'est pas inclus dans la première liste, l'ajout de l'identifiant de la première entité de réseau à la première liste pour obtenir une deuxième liste d'identifiants d'entités de réseau.

6. Procédé (400) selon la revendication 5, le procédé (400) comprenant en outre :
la transmission (430) d'une demande à une troisième entité de réseau, dans lequel la demande contient la deuxième liste des identifiants d'entités de réseau, en réponse à la détermination qu'un identifiant de la troisième entité de réseau n'est pas inclus dans la première liste.

7. Procédé (400) selon la revendication 5 ou 6, comprenant en outre, lorsque l'identifiant de la première entité de réseau n'est pas inclus dans la première liste :
la création d'une nouvelle ressource pour l'API de service au niveau de la première entité réseau ; et
la transmission, à la deuxième entité réseau, d'une réponse de publication d'API indiquant le succès de la publication de l'API de service et contenant un identifiant de la nouvelle ressource créée.

8. Procédé (400) selon l'une quelconque des revendications 5 à 7, dans lequel chacune de la première entité de réseau, de la deuxième entité de réseau, de la troisième entité de réseau, et des entités de réseau qui ont publié l'API de service est une entité de fonction principale du cadre d'API commun « CAPIF », CCF.

9. Procédé (400) selon la revendication 8, dans lequel la première entité de réseau, la deuxième entité de réseau, la troisième entité de réseau, et les entités de réseau qui ont publié l'API de service sont toutes dans un seul domaine de fournisseur CAPIF.

10. Première entité de réseau (800) comprenant une interface de communication (810), un processeur (820) et une mémoire (830), la mémoire (830) comprenant des instructions exécutables par le processeur (820) par lesquelles la première entité de réseau (800) est opérationnelle pour mettre en œuvre le procédé selon l'une quelconque des revendications 1 à 9.

11. Support de stockage lisible par ordinateur sur lequel sont stockées des instructions de programme informatique, les instructions de programme informatique, lorsqu'elles sont exécutées par un processeur dans une première entité de réseau, amenant la première entité de réseau à mettre en œuvre le procédé selon l'une quelconque des revendications 1 à 9.
